# EUROPEAN PATENT APPLICATION

(11) **EP 4 040 082 A1**
(43) Date of publication of application: **10.08.2022**
(21) Application number: 22154624.5
(22) Date of filing: 01.02.2022
(51) Int. Cl.: F25B 31/02, F25B 41/22, F25B 49/02, F25B 1/04, F25B 40/02

(54) **TRANSPORT REFRIGERATION UNIT WITH COMPRESSOR WITH CAPACITY MODULATION**

(30) Priority: 05.02.2021 US 202163146309 P
(71) Applicant: Carrier Corporation, Palm Beach Gardens, FL 33418 (US)
(72) Inventor: SENF, Ray, Syracuse, 13221 (US)
(74) Representative: Dehns

(57) **Abstract**

A refrigeration system includes a high-pressure side scroll compressor (20, 120) having a primary suction port (48; 142) and an intermediate suction port (47; 146), an evaporator (136) having an inlet and an outlet, a primary compressor inlet flow path fluidly coupling the outlet of the evaporator (136) with both the primary suction port (48; 142) and the intermediate suction port (47; 146), and a control valve operable to direct a flow of fluid moving along the primary compressor inlet flow path to at least one of the primary suction port (48; 142) to the intermediate suction port (47; 146) in response to a mode of operation of the refrigeration system. A capacity of the compressor (20; 120) associated with the primary suction port (48; 142) is greater than a capacity of the compressor (20; 120) associated with the intermediate suction port (47; 146).

## Description

The subject matter disclosed herein generally relates to transport refrigeration units and, more particularly, to control and operation of a transport refrigeration units having a high-pressure side scroll compressor.

Scroll compressors are commonly used in refrigeration systems. The scroll compressor for a system is selected based on the most extreme operation conditions, such as the greatest compression capacity that could be required. However, operation at these most extreme or worst case conditions rarely occurs. As a result, the compressor is generally operated under a low-load condition and sometimes with a high compression ratio, thereby limiting the operation efficiency of the compressor, and therefore of the refrigeration system. In addition, when variable speeds are incorporated into the transport refrigeration system, new challenges occur. For example, the density of the suction gas varies in response to the capacity of the system. The variation in gas density imposes challenges in refrigeration and temperature control, especially at higher setpoint conditions where the compression fluid has a comparatively large suction gas density and heat gain from leakage into the trailer is minimal. Accordingly, there is a need for a variable capacity compressor capable of functioning efficiently during normal operating conditions and extreme operating conditions.

According to a first aspect, there is provided a refrigeration system includes a high-pressure side scroll compressor having a primary suction port and an intermediate suction port, an evaporator having an inlet and an outlet, a primary compressor inlet flow path fluidly coupling the outlet of the evaporator with both the primary suction port and the intermediate suction port, and a control valve operable to direct a flow of fluid moving along the primary compressor inlet flow path to at least one of the primary suction port to the intermediate suction port in response to a mode of operation of the refrigeration system. A capacity of the compressor associated with the primary suction port is greater than a capacity of the compressor associated with the intermediate suction port.

Optionally, during operation of the refrigeration system in a first mode, the control valve is in a first configuration and fluid is provided to the primary suction port.

Optionally, during operation of the refrigeration system in a second mode, the control valve is in a second configuration at least a portion of the fluid within the primary compressor inlet flow path is provided to the intermediate suction port.

Optionally, when the control valve is in the second configuration, all of the fluid within the primary compressor inlet flow path is provided to the intermediate suction port.

Optionally, comprising an economizer heat exchanger and a secondary compressor inlet flow path fluidly coupling the economizer heat exchanger to the intermediate suction port.

Optionally, in a third mode of operation, fluid is provided to the intermediate suction port via the secondary compressor inlet flow path.

Optionally, in the third mode of operation, fluid is also provided to at least one of the primary suction port and the intermediate suction port via the primary compressor inlet flow path.

Optionally, the mode of operation of the refrigeration system is selected in response to a demand of the refrigeration system relative to a capacity of the compressor.

According to another aspect, there is provided a method of operating a refrigeration system includes selecting a mode of operation in response to a demand on the refrigeration system and a capacity of a compressor of the refrigeration system. The compressor is a high-pressure side scroll compressor having a primary suction port and an intermediate suction port. The method additionally includes controlling a configuration of at least one valve in response to the selected mode and providing a flow of fluid to the compressor via a primary compressor inlet flow path fluidly coupled to both the primary suction port and the intermediate suction port in parallel. In a first mode of operation, the flow of fluid from the primary compressor inlet flow path is provided to the primary suction port and in a second mode of operation, the flow of fluid from the primary compressor inlet flow path is provided to the intermediate suction port.

Optionally, in at least one of the first mode and the second mode the flow of fluid is provided to both the primary suction port and the intermediate suction port.

Optionally, in the first mode of operation, the flow of fluid is only provided to the primary suction port.

Optionally, in the second mode of operation, the flow of fluid is only provided to the intermediate suction port.

Optionally comprising providing a flow of fluid to the compressor via a secondary compressor inlet flow path fluidly coupled to the intermediate suction port.

Optionally, providing the flow of fluid to the compressor via the primary compressor inlet flow path occurs simultaneously with providing the flow of fluid to the compressor via the secondary compressor inlet flow path.

Optionally, the flow of fluid in the secondary compressor inlet flow path is provided from an economizer heat exchanger.

Optionally, a capacity of the compressor associated with the primary suction port is greater than a capacity of the compressor associated with the intermediate suction port.

The following descriptions should not be considered limiting in any way. With reference to the accompanying drawings, like elements are numbered alike:
FIG. 1 is a partially cut away view of a high-pressure side scroll compressor; and
FIG. 2 is a schematic diagram of a transport refrigeration unit including a high-pressure side scroll compressor.

A detailed description of one or more embodiments of the invention are presented herein by way of exemplification and not limitation with reference to the Figures.

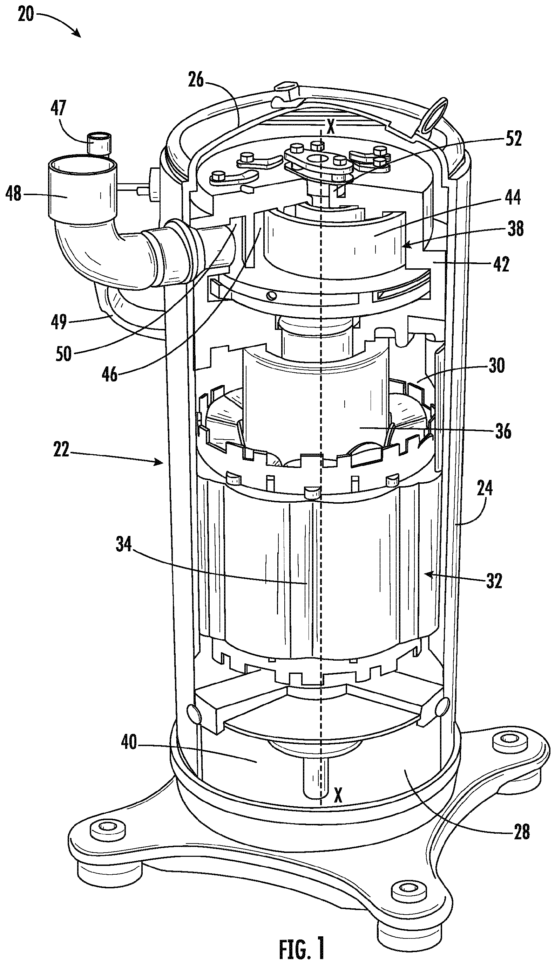

With reference now to FIG. 1, an example of a high-pressure side scroll compressor 20 is illustrated. As used herein, the term "high-pressure side scroll compressor" is intended to refer to a scroll compressor where the motor is arranged in the discharge pressure region (high pressure region) of the shell, to be described in more detail below.

As shown, the scroll compressor 20 may include a housing or shell 22 with a substantially cylindrical body 24 and a cover 26, 28 arranged at a top and bottom of the body 24, respectively, to define a hermetically sealed internal volume 30 of the housing 22. The scroll compressor 20 additionally may include an electric motor 32 including a stator 34 and a rotor 36, and a compression mechanism 38 operable to compress a working fluid, such as refrigerant. The electric motor 32 may be operably coupled to the compression mechanism 38 via a drive shaft (not shown). The stator 34 may be fixed to the housing 22 and the rotor 36 may be used to rotate the drive shaft about an axis of rotation X.

A lubricant, such as lubricating oil for example, may be stored in a sump 40 arranged at the bottom of the internal volume within the housing 22. In an embodiment, an end of the drive shaft is immersed within the sump 40 at the bottom of the housing 22. In such embodiments, the centrifugal force generated by rotation of the drive shaft may be used to draw lubricant from the sump 40 upward through an oil passage formed in the drive shaft. However, embodiments where a pumping device separate from the drive shaft is used to pump lubricant through the compressor are also contemplated herein.

The compression mechanism 38 may include a fixed scroll 42, for example mounted to a portion of the housing 22 and a movable scroll 44 mounted to the drive shaft and positioned generally adjacent to the fixed scroll 42. During operation of the compressor 20, the movable scroll 44 may be radially engaged with the fixed scroll 42 and orbit relative thereto to form a plurality of compression chambers 46 defined between the scrolls 42, 44. As shown in FIG. 1, a first fluid inlet or primary suction port 48 for receiving a working fluid may be formed at or near the top cover 26 of the housing 22, and a fluid outlet 49 for discharging the compressed working fluid may be formed in a portion of the body 24 of the housing 22. A second fluid inlet or intermediate suction port 47 may be located about the housing 22 at a position between the motor 32 and the compression mechanism 38.

The primary suction port 48 is typically connected to the fixed scroll 42 of the compression mechanism 38 for fluid communication with a suction chamber 50 formed in the fixed scroll 42. The fluid within the suction chamber 50 is then moved to a compression chamber 46 of the compression mechanism 38. From the compression chamber 46, a high-pressure gas flows from a discharge port 52 of the fixed scroll 42 to a high pressure space within the interior 30 of the housing 22, such as between the bottom of the housing 22 and the motor 32 for example. In embodiments of the compressor 20 including an intermediate or second suction port 47, such an intermediate suction port may be similarly configured to deliver fluid to the compression chamber 46 of the compression mechanism 38. However, the fluid provided via the intermediate suction port may be provided to a downstream portion or more internal region of the compression chamber 46 relative to the fluid provided to the compression chamber 46 via the primary suction port 48. As a result, the fluid provided via the intermediate suction port 47 has a reduced effective displacement per revolution at the compression mechanism 38 than the fluid provided via the primary suction port 48.

As the compressed high pressure fluid or discharge gas flows from the discharge port 52 of the compression mechanism 38 to the fluid outlet 49, the high pressure space within the interior 30 of the housing 22 is exposed to the discharge gas. As a result, at least a portion, and in some embodiments, substantially all, of the heat generated by the motor 32 is removed by the discharge gas. During this cooling, the discharge gas is at its highest temperature within the compressor 20.

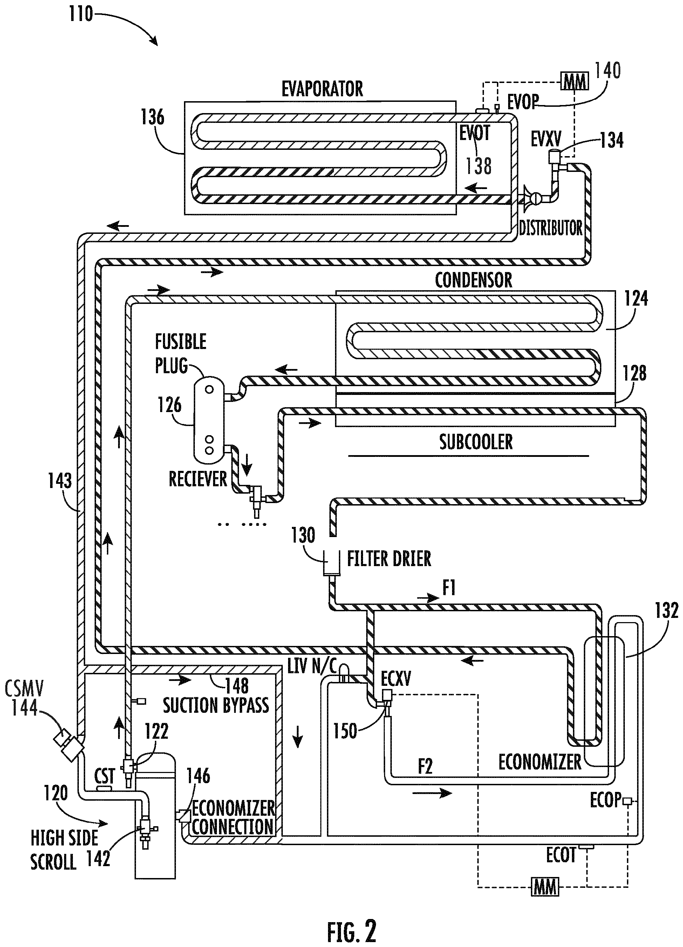

With reference now to FIG. 2, a schematic representation of an example of a transport refrigeration unit 110 is illustrated. As shown, the transport refrigeration unit 110 includes a compressor 120. In an embodiment, the compressor 120 is a high-pressure side scroll compressor, such as compressor 20 described above. A high temperature, high pressure refrigerant vapor, such as discharge gas, exits a discharge port 122 of the compressor 120 and is provided via one of more conduits to a heat rejecting heat exchanger 124, for example a condenser or gas cooler. In an embodiment, the heat rejecting heat exchanger 124 includes a plurality of condenser coil fins and tubes which receive air, typically blown by another heat rejecting heat exchanger (not shown). By removing latent heat through this step, the refrigerant vapor condenses to a high pressure/high temperature liquid. At the outlet of the heat rejecting heat exchanger 124, the refrigerant is configured to flow to a receiver 126 operable to provide storage for excess liquid refrigerant during low temperature operation of the unit 110. From the receiver 126, the refrigerant flows to a subcooler 128, which increases the refrigerant subcooling. The subcooler 128 may be positioned near or directly adjacent to the heat rejecting heat exchanger 124 such that the refrigerant within the subcooler 128 is cooled by an air flow from the heat rejecting heat exchanger fan (not shown). However, a subcooler 128 cooled by a fluid from another source is also contemplated herein.

In the illustrated, non-limiting embodiment, the unit 110 includes a filter-drier 130 configured to clean and dry the refrigerant before providing the refrigerant to a first refrigerant flow path F1 of an economizer heat exchanger 132. Within the first refrigerant flow path F1, the subcooling of the refrigerant is increased. In an embodiment, the economizer heat exchanger 132 is a plate-type heat exchanger, providing a refrigerant to refrigerant heat exchange between the first refrigerant flow path F1 and a second refrigerant flow path F2 to be described in more detail below.

From the first refrigerant flow path F1, the refrigerant flows from the economizer heat exchanger 132 to an evaporator expansion device 134. The evaporator expansion device 134 is associated with an evaporator heat exchanger 136, also referred to herein as an evaporator, and is operable to control a flow of refrigerant to the evaporator 136. The evaporator expansion device 134 may be controlled by a controller, illustrated schematically at MM, in response to signals from an evaporator outlet temperature sensor 138 and/or an evaporator outlet pressure sensor 140. An evaporator fan (not shown) is operable to draw or push air over the evaporator 136, which is used to condition the air in a compartment associated with the transport refrigeration unit 110. The outlet of the evaporator 136 is fluidly connected to a primary suction port 142 of the compressor 120 via a conduit 143 to define a first portion of a primary compressor inlet flow path.

As shown in figure 2, a valve 144, such as a compressor suction modulation valve (or solenoid valve) for example, is arranged along the primary compressor inlet flow path, downstream from the evaporator heat exchanger 136 and upstream from the primary suction port 142. The valve 144 may be operably coupled to the electronic controller MM. Accordingly, the electronic controller MM can generate one or more signals commanding movement of the valve 144 to a desired configuration based on a mode of operation or one or more operating conditions of the unit 110. As will be appreciated by those of skill in the art, the transport refrigeration unit 110 can include additional features and components, such as a thermal expansion valve and/or other components, which are not shown for simplicity. In some embodiments, the evaporator expansion valve 134 can be replaced or substituted with the compressor suction modulation valve 144 to control the flow through the evaporator heat exchanger 136. Alternatively, in some embodiments, the transport refrigeration unit 110 can include an evaporator expansion valve 134, a suction modulation valve(s) 144, and/or other valves as known in the art.

As shown, the compressor 120 may have a second or intermediate suction port 146. The intermediate suction port 146 may be located at an intermediate location along a compression path between the primary suction port 142 and the compressor discharge port 122. Further in an embodiment, a bypass conduit 148 couples the conduit 143 to the intermediate suction portion 146. The bypass conduit 148 defines a second portion of the primary compressor inlet flow path, the second portion being arranged in parallel with the first portion of the primary compressor inlet flow path. Accordingly, the primary compressor inlet flow path extends from the evaporator heat exchanger 136 to the compressor and is configured to deliver refrigerant to at last one of the primary suction port 142 and the intermediate suction port 146. In an embodiment, the bypass conduit 148 is coupled to the conduit 143 at a location upstream from the valve 144 such that the configuration of the valve 144 may be controlled to selectively direct the fluid flow within the primary compressor inlet flow path to one or both of the primary suction port 142 and the intermediate suction port 146 based on the demands of the unit 110.

In the illustrated, non-limiting embodiment, the transport refrigeration unit 110 further includes a second refrigerant flow path F2 through the economizer heat exchanger 132. As shown, the second refrigerant flow path F2 extends between the first refrigerant flow path F1 and the intermediate suction port 146 of the compressor 120. An economizer expansion device 150 is positioned in the second refrigerant flow path F2, upstream of the economizer heat exchanger 132. The economizer expansion device 150 may be an electronic economizer expansion device controlled by the controller MM. When the economizer heat exchanger 132 is active, the controller MM controls the economizer expansion device 150 to selectively allow refrigerant to pass through the second refrigerant flow path F2, through the economizer heat exchanger 132 and to the intermediate suction port 146. Accordingly, the second refrigerant flow path defines at least a portion of a secondary compressor inlet flow path. The economizer expansion device 150 serves to expand and cool the refrigerant which proceeds into the economizer counter-flow heat exchanger 132, thereby subcooling the liquid refrigerant in the first refrigerant flow path F1 proceeding to the evaporator expansion device 134.

Those of skill in the art will appreciate that the schematics and configuration shown in FIG. 2 are merely an example of a transport refrigeration unit 110 and are not intended to be limiting. For example, other components or configurations are possible without departing from the scope of the present invention as defined by the claims. For example, refrigeration systems may include controllers, receivers, filters, dryers, additional valves, heat exchangers, sensors, indicators, etc. without departing from the scope of the present invention.

The transport refrigeration unit 110 is operable in a plurality of modes. The unit 110 is configured to operate in a first mode during a normal load condition of the unit 110, such as when an intermediate capacity of the compressor 120 is required to maintain a stable temperature equal to a desired product storage temperature. Accordingly, this first mode of operation is typically used when the desired speed of the variable compressor is less than maximum speed of the compressor but more than minimum speed of the compressor. This speed may be selected in part based on a temperature error determined by comparing the set point of the trailer to a desired temperature of the trailer.

During a first standard mode of operation, the economizer expansion device 150 is in a closed position. With the economizer expansion device 150 closed, approximately no refrigerant, such as less than about 2% or 1% of the refrigerant for example, will flow through the second refrigerant flow path F2. Rather, approximately all of the refrigerant, such as at least about 98% of the refrigerant for example, flows through the first refrigerant flow path F1 to the evaporator expansion device 134 and from the evaporator heat exchanger 136 to the compressor 120 via the primary compressor inlet flow path. In the first mode of operation, the compressor suction modulation valve 144 is in a first configuration such that the refrigerant within the primary compressor inlet flow path is provided to the primary suction port 142. In an embodiment, flow through the second portion of the primary compressor inlet flow path defined by the bypass conduit 148 is blocked when the valve 144 is in the first configuration. However, embodiments where a portion of the refrigerant flow is provided to the intermediate suction port 146 when the valve 144 is in the first configuration are also contemplated herein.

The transport refrigeration unit 110 is additionally operable in a second mode, for example, when a reduced capacity of the compressor 120 is required to maintain a stable temperature equal to a desired product storage temperature. In an embodiment, the transport refrigeration unit 110 is operable in the second mode when the operational conditions require the minimum refrigeration capacity. Such operation conditions include but are not limited to when the temperature differential between the ambient temperature and the set point temperature is small, and when the trailer contains a non-respiring cargo or pharmaceutical type load. Further, the unit 110 may be operated in the second mode if compressor is at the minimum allowable rotational speed, and excess refrigeration capacity is still present.

Operation of the unit 110 in the second mode may be substantially similar to operation in the first mode. However, in the second mode, the valve 144 is in a second configuration. In the second configuration, at least a portion of the fluid output from the evaporation heat exchanger 136 to the primary compression inlet flow path is directed into the bypass conduit 148 and provided to the intermediate suction port 146. In the second mode of operation, when the valve 144 is in the second configuration, a portion of the flow from the primary compression inlet flow path may also be supplied to the primary suction port 142 such that flow is provided to both the primary suction port 142 and the intermediate suction inlet 146 simultaneously. However, in other embodiments, in the second configuration, the valve 144 may be operable to block a flow of refrigerant to the primary suction port 142.

When the transport refrigeration unit 110 is operating at a high capacity, for example when the temperature of the container is above the desired product storage temperature, the transport refrigeration unit 110 is operable in a third mode of operation. In the third mode of operation, the controller MM will transform the economizer expansion device 150 to an open position, thereby allowing refrigerant to flow through both the first refrigerant flow path F1 and the second refrigerant flow path F2. The refrigerant within the first refrigerant flow path F1 flows through the economizer heat exchanger 132 and the evaporator 136 before being returned to one of the primary suction port 142. At the same time, the refrigerant within the second refrigerant flow path F2 passes from the economizer heat exchanger 132 directly to the intermediate suction port 146 via the secondary compressor inlet flow path, thereby bypassing the evaporator expansion device 134 and evaporator heat exchanger 136.

A transport refrigeration unit 110 including a high-pressure side compressor as described herein allows for optimized operation of the compressor 120 by allowing for significant reductions in capacity based on which suction port 142, 146 or combination of suction ports is configured to receive a flow to be compressed. This reduction in capacity will allow for better temperature control. In addition, by using a high-pressure side compressor, the adjustment in capacity can be achieved without impacting the lubrication of the compressor. Further, the flow path of oil within a high pressure side scroll compressor allows substantially all, for example at least about 98% in certain instances, of the oil to be returned to the sump regardless of whether the refrigerant is provided to the primary suction port 142 of the intermediate suction port 146.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made, and equivalents may be substituted for elements thereof without departing from the scope of the invention as defined by the appended claims. In addition, many modifications may be made to adapt a particular situation or material to the teachings of the present invention without departing from the scope thereof as defined by the claims. Therefore, it is intended that the present invention not be limited to the particular embodiment disclosed as the best mode contemplated for carrying out this present invention, but that the present invention will include all embodiments falling within the scope of the claims.

## Claims

1. A refrigeration system comprising:
a high-pressure side scroll compressor (20; 120) having a primary suction port (48; 142) and an intermediate suction port (47; 146), wherein a capacity of the compressor associated with the primary suction port (48; 142) is greater than a capacity of the compressor associated with the intermediate suction port (47; 146);
an evaporator (136) having an inlet and an outlet;
a primary compressor inlet flow path fluidly coupling the outlet of the evaporator (136) with both the primary suction port (48; 142) and the intermediate suction port (47; 146); and
a control valve operable to direct a flow of fluid moving along the primary compressor inlet flow path to at least one of the primary suction port (48; 142) and the intermediate suction port (47; 146) in response to a mode of operation of the refrigeration system.

2. The refrigeration system of claim 1, wherein during operation of the refrigeration system in a first mode, the control valve is in a first configuration and fluid is provided to the primary suction port (48; 142).

3. The refrigeration system of claim 1 or 2, wherein during operation of the refrigeration system in a second mode, the control valve is in a second configuration at least a portion of the fluid within the primary compressor inlet flow path is provided to the intermediate suction port (47; 146).

4. The refrigeration system of claim 3, wherein when the control valve is in the second configuration, all of the fluid within the primary compressor inlet flow path is provided to the intermediate suction port (47; 146).

5. The refrigeration system of any preceding claim, further comprising:
an economizer heat exchanger (132); and
a secondary compressor inlet flow path fluidly coupling the economizer heat exchanger (132) to the intermediate suction port (47; 146).

6. The refrigeration system of claim 5, wherein in a third mode of operation, fluid is provided to the intermediate suction port (47; 146) via the secondary compressor inlet flow path.

7. The refrigeration system of claim 6, wherein in the third mode of operation, fluid is also provided to at least one of the primary suction port (48; 142) and the intermediate suction port (47; 146) via the primary compressor inlet flow path.

8. The refrigeration system of any preceding claim, wherein the mode of operation of the refrigeration system is selected in response to a demand of the refrigeration system relative to a capacity of the compressor (20; 120).

9. A method of operating a refrigeration system comprising:
selecting a mode of operation in response to a demand on the refrigeration system and a capacity of a compressor (20; 120) of the refrigeration system, wherein the compressor (20; 120) is a high-pressure side scroll compressor (20; 120) having a primary suction port (48; 142) and an intermediate suction port (47; 146);
controlling a configuration of at least one valve in response to the selected mode; and
providing a flow of fluid to the compressor (20; 120) via a primary compressor inlet flow path fluidly coupled to both the primary suction port (48; 142) and the intermediate suction port (47; 146) in parallel, wherein in a first mode of operation the flow of fluid from the primary compressor inlet flow path is provided to the primary suction port (48; 142) and in a second mode of operation the flow of fluid from the primary compressor inlet flow path is provided to the intermediate suction port (47; 146).

10. The method of claim 9, wherein in at least one of the first mode of operation and the second mode of operation the flow of fluid is provided to both the primary suction port (48; 142) and the intermediate suction port (47; 146).

11. The method of claim 9, wherein in the first mode of operation, the flow of fluid is only provided to the primary suction port (48; 142) and/or wherein in the second mode of operation, the flow of fluid is only provided to the intermediate suction port (47; 146).

12. The method of claim 9, further comprising providing a flow of fluid to the compressor via a secondary compressor inlet flow path fluidly coupled to the intermediate suction port (47; 146).

13. The method of claim 12, wherein providing the flow of fluid to the compressor via the primary compressor inlet flow path occurs simultaneously with providing the flow of fluid to the compressor via the secondary compressor inlet flow path.

14. The method of claim 12 or 13, wherein the flow of fluid in the secondary compressor inlet flow path is provided from an economizer heat exchanger (132).

15. The method of any of claim 9 to 14, wherein a capacity of the compressor (20; 120) associated with the primary suction port (48; 142) is greater than a capacity of the compressor associated with the intermediate suction port (47; 146).
